# EUROPEAN PATENT SPECIFICATION

(11) **EP 0 647 241 B1**
(45) Date of publication and mention of the grant of the patent: **13.01.1999**
(21) Application number: 92911689.5
(22) Date of filing: 22.06.1992
(51) Int. Cl.: C08F 4/654, C08F 10/00

(54) **PROCESS FOR PREPARING A PROCATALYST COMPOSITION BY IMPREGNATION OF A CARRIER WITH A MAGNESIUM ALKOXIDE, A TITANIUM ALKOXIDE AND AN ALCOHOL SOLUTION**
VERFAHREN ZUR HERSTELLUNG EINER PROKATALYSATOR-ZUSAMMENSETZUNG DURCH IMPREGNIEREN EINES TRÄGERS MIT MAGNESIUM-ALKOXID, TITAN-ALKOXID UND EINER ALKOHOLLÖSUNG
PROCEDE DE PREPARATION D'UNE COMPOSITION DE PROCATALYSE PAR IMPREGNATION D'UN SUPPORT AVEC UN ALCOXYDE DE MAGNESIUM, UN ALCOXYDE DE TITANE ET UNE SOLUTION D'ALCOOL

(43) Date of publication of application: 12.04.1995
(73) Proprietor: BOREALIS POLYMERS OY, 06101 Porvoo (FI)
(72) Inventor: ANDELL, Ove, FIN-00960 Helsinki (FI)
(74) Representative: Sexton, Jane Helen
(86) International application number: FI9200196
(87) International publication number: WO9400498

(56) References cited:
- EP-A- 0 160 413
- EP-A- 0 294 168
- EP-A- 0 302 242
- WO-A-91/08239
- WO-A-91/09881

## Description

The invention relates to process for preparing a procatalyst composition suitable for the polymerization of ethene and other α-olefins, which comprises the steps of:
a) contacting an inorganic oxide carrier, having its surface hydroxyl content lowered by calcination at 600 - 1000°C or by reaction with a hydroxyl removing agent, with an impregnation solution consisting of a magnesium compound, an alcohol, a tetravalent titanium compound and optionally a hydrocarbon solvent,
b) chlorinating the contacted inorganic oxide carrier with a chlorinating agent, and
c) recovering the chlorination product to yield the procatalyst composition,
   characterized in that the magnesium compound is a magnesium alkoxide of the formula Mg(OR)₂ wherein the groups can be different or similar alkyl groups, the tetravalent titanium compound is a titanium alkoxide and the alcohol is an alcohol of the formula R²OH wherein R² is a C₁-C₈ alkyl group.

In one aspect the invention relates to a procatalyst composition made by such a process and in another aspect the invention relates to the use of such a procatalyst composition for the polymerization of ethene and other α-olefins.

Olefins are traditionally polymerized (i.e. homo- and copolymerized) by a Ziegler-Natta catalyst system, which consists of a so-called procatalyst and a so-called cocatalyst. The procatalyst is based on a compound of a transition metal belonging to any of groups IVA-VIII (Hubbard) of the periodic table of the elements and the cocatalyst is based on an organometallic compound of a metal belonging to any of groups I(A)-III (Hubbard) of the periodic table of the elements. The catalyst system often also includes a solid procatalyst carrier as well as electron donors which improve and modify the catalytic properties of the system.

The catalytic activity of the procatalyst is greatly enhanced by carriers like the magnesium halides, alkoxides, hydroxides and oxides, titanium dioxide, aluminium oxide and silica. In the case of silica, the carrier is usually first treated thermically and/or chemically to remove at least a part of its surface hydroxyl groups. Then the pretreated solid carrier is often treated with one or more liquids which contain a surface modifying magnesium compound, an electron donor/solvent like tetrahydrofuran or butanol, a titanium compound, and, finally, a chlorinating agent.

Such procatalysts and their preparation processes are disclosed, among others, in FI patents 70417, 70418 and 78113, FI applications 895703 and 896323, EP publications 117929, 173102, 173471, 173485, 173488 and 185521, and US patent publications 4 855 271, 4 876 229, 4 833 111 and 4 888 318.

US-4 833 111 discloses a process for preparing a procatalyst, wherein calcined silica is treated with a solution of a dialkyl magnesium in a hydrocarbon, then treated with EtOH, then with TiCl₄, and finally with ethylaluminium dichloride before recovering the product.

US 4 855 271 discloses a process for preparing a procatalyst by impregnating a calcined alumina carrier with a solution of magnesium dichloride and titanium tetraethoxide in an alcohol (example VI). After evaporation of the alcohol, the resulting solid was treated with titanium tetrachloride, and recovered as a highly active procatalyst.

EP-application 173 471 discloses the treatment of dehydrated silica in isopentane with a solution of butylethyl magnesium and butanol in hexane. Then the mixture was treated with titanium tetrachloride, chlorine gas and trialkyl aluminium before drying to yield the expected procatalyst. As a separate trialkyl aluminium compound was added just before polymerization, the above mentioned trialkyl aluminium was not acting as a cocatalyst.

FI application 896 323 discloses a process for preparing a procatalyst by impregnating silica, dried at 120-800°C and dehydrated with hexamethyl disilazane, with an impregnating solution comprising a mixture of triethyl aluminium in pentane, butanol and butyloctyl magnesium in heptane. The aluminium compound, the magnesium compound and the alcohol formed a bimetallic compound to be impregnated. Treatment with titanium tetrabutoxide was performed either by a subsequent contacting step or by including it in advance into the impregnation solution. After a drying step the composition was chlorinated with ethylaluminium sesquichloride or ethylaluminium dichloride to yield the procatalyst.

The above processes have either the disadvantage of using large amounts of polar liquids in the impregnation solution, like tetrahydrofuran and alcohols, or the disadvantage of using titanium tetrachloride as the titanium source of catalytic activity, or both.

When polar solvents like tetrahydrofuran and alcohols are used as the major solvent, the drying procedure is often long and tedious. It is especially difficult to remove the last traces of polar solvent. The remaining amounts of polar solvent inside the procatalyst has a clearly negative effect on the activity and performance of the procatalyst.

Titanium tetrachloride has, when used, as a titanium source in the prior art, led to a large fraction of inactive titanium, which remains in the polymer as a harmful impurity.

Further, titanium tetrachloride has the disadvantage, that it does not easily form an impregnation solution together with a magnesium compound and an alcohol, which limits its use as the sole titanium source.

The purpose of the present invention is to provide a process, in which non-polar and volatile solvents can be used at the various impregnating stages of the above procatalyst preparation. The aim is also to avoid the use of titanium tetrachloride as the initial source of titanium in the pro-catalyst. Further, a process is strived for, wherein the procatalyst composition comprising magnesium and titanium on a carrier can be prepared more conveniently than before using a novel technique of contacting the various active components with each other and the carrier.

The above purposes of the present invention have now been achieved by providing a process for preparing a procatalyst composition, which is mainly characterized by what is said in the characterizing part of claim 1. It has thus been realized, that a better procatalyst and a more convenient process for preparing it can be achieved, when the solid, anhydrous silica carrier is treated with only one impregnation solution, which consists of a magnesium alkoxide, a titanium alkoxide and an alcohol as defined in claim 1.

Although the magnesium alkoxide, the titanium alkoxide and the alcohol can act alone as an impregnation solution, which still has the advantages of homogenously combining the magnesium and titanium components, it is preferable to use a hydrocarbon solvent as the medium of the impregnation solution. The combination of a magnesium alkoxide, a titanium alkoxide and a lower alcohol has the property of being soluble in hydrocarbons, although e.g. some magnesium alkoxides of the combination are alone insoluble in them. A suitable hydrocarbon solvent has 4 to 10 carbons in its molecules, like pentane, hexane and/or heptane.

As was said above, the use of titanium tetrachloride has some disadvantages, and therefore it is preferable, if essentially all titanium used as starting material in the process is in the form of titanium alkoxide. It is also convenient, if essentially all of the magnesium used in the process of the invention is in the form of magnesium alkoxide. In some prior works, titanium alkoxides have been used as process modifying additives (e.g. US 4 855 271), which of course is not their main purpose in the present invention.

In the present invention the magnesium alkoxide is represented by the formula (I)

Mg(OR)₂ (I)

wherein the groups R can be different or similar alkyl groups, preferably C₂-C₅ alkyl groups, like magnesium-di-n-propoxide.

The titanium alkoxide can e.g. be a partial alkoxide of tetravalent titanium, but is rather a titanium tetraalkoxide represented by the formula (II)

Ti(OR¹)₄ (II)

wherein the groups R¹ can be different or similar C₂-C₈ alkyl groups, preferably C₂-C₅ alkyl groups and most preferably C₃ or C₄ groups, like titanium tetrabutoxide.

The alcohol used as a compound in the impregnation solution of the process is an alcohol which forms together with the other components an essentially stable, homogenous and non-viscous solution. The alcohol is a lower monohydroxy alcohol of the following formula (III)

R²OH (III)

wherein R² is a C₁-C₈ alkyl group, most preferably a C₂-C₅ alkyl group like 1-butanol.

According to one embodiment of the present invention the impregnation solution is made by mixing together and optionally heating the magnesium alkoxide, the titanium alkoxide, the alcohol, and, preferably, the hydrocarbon solvent. The result is a stable, clear and essentially uncolored solution of low viscosity, which easily penetrates the surface pores of the carrier during impregnation.

The molar ratio in the impregnation solution, and in the above mixing, between the magnesium alkoxide and the titanium alkoxide, conveniently exceeds 2.5 and is preferably between 2.5 and 4. The corresponding molar ratio between the alcohol and the titanium alkoxide is readily larger than or equal to 1 and preferably between 1.5 and 3. The equivalent molar ratio between the magnesium alkoxide and the alcohol is preferably between 1 and 3, and most preferably between 1 and 2.

According to another embodiment of the present invention, the impregnation solution consisting of the magnesium alkoxide, the titanium alkoxide, the alcohol, and, preferably, the hydrocarbon solvent, is made in situ. In that connection a magnesium alkyl or a magnesium alkoxy alkyl is e.g. dissolved in a hydrocarbon and then mixed with the alcohol and the titanium alkoxide. Then the mixture is reacted or allowed to react, whereby the magnesium alkyl or magnesium alkoxy alkyl are essentially converted to the desired magnesium alkoxide component of the impregnation solution. Of the added chemicals titanium alkoxide, hydrocarbon, alcohol and magnesium alkyl or magnesium alkoxy alkyl, it is crucial that the magnesium alkyl (or alkoxy alkyl) or the titanium alkoxide is added last. This is to avoid reduction of Ti(IV) species to Ti(III) species and to form a solution of low viscosity.

When the impregnation solution is prepared this way in situ, the preferred molar ratio between the alcohol added and the titanium alkoxide added is conveniently larger than or equal to 1 and preferably between 3 and 9. The corresponding preferred molar ratio between the magnesium alkyl or magnesium alkoxy alkyl and the alcohol is between 0.25 and 1, preferably between 0.4 and 0,8. It must be recognized that the amount of alcohol added depends on whether magnesium alkyl or magnesium alkoxy alkyl is being used. When magnesium alkoxy alkyl is used, the amount of added alcohol preferably lies between that given for the in situ preparation and that given for the mixing preparation of the impregnation solution. The alcohol cannot usually be added last when mixing the ingredients.

The magnesium alkyl or magnesium alkoxy alkyl used as starting material in the in situ preparation of the impregnation solution can, in principle be any conventional magnesium alkyl or magnesium alkoxy alkyl. It is suitable, if the alkyl groups is a C₂-C₈ alkyl. When mixing the ingredients, the magnesium alkyl or alkoxy alkyl is preferably added last.

The inorganic oxide carrier used as a carrier in the process of the invention has to be dry and have a low content of surface hydroxyls. As commercial products usually have their surface hydroxyls preserved, they must generally be removed in connection with the process of the present invention. The removal takes place either by a thermal process or a chemical process. The thermal and chemical processes can also be combined. Typical inorganic oxide carries are silica, alumina, their mixed oxides, and other mixed silicates.

A preferable inorganic oxide is silicium oxide, i.e. silica. The thermal treatment of silica is by lower temperatures directed to removal of water and by higher temperatures to removal of the surface hydroxyls by calcination. The thermal treatment is preferably carried out at temperatures of about 130-1000°C. According to one embodiment of the invention, silica is first dried at a temperature of about 135-250°C in order to remove physically adsorbed water. Then, silica may be calcinated at higher temperatures in order to remove its hydroxyl groups. This method is especially used at 600-1000°C if the silica is not chemically treated prior to reaction with the impregnation solution. The silica pretreated by calcinating for several hours at such high temperature contains essentially no surface hydroxyls.

The chemical removal of surface hydroxyl groups of the silica carrier can also be conducted by using materials reacting with hydroxyl groups. Such materials include organic silicon, aluminium, zinc, phosporous and/or fluorine compounds. Convenient hydroxyl removing agents are hexamethyl disilazane, triethyl aluminium, diethyl aluminium chloride, ethylaluminium dichloride and diethyl zinc.

The dried silica is typically reacted with the hydroxyl removing agent in a hydrocarbon slurry in order to convert the silica hydroxyls to oxygen bridges between the silica and the removing agent and preferably form a non-reducing surface on the silica carrier. Before the thus pretreated silica is fed further to the impregnation step of the process, the hydrocarbon solvent can optionally be removed together with any excess of hydroxyl removing agent. Measures like those mentioned can also be used for the removal of surface hydroxyls from other inorganic oxides than silica.

In the impregnation step, the impregnation solution described above is contacted with the pretreated silica or a hydrocarbon slurry thereof and allowed to react over a suitable time. It is possible to remove the hydrocarbon solvent together with any impregnation reaction by-products if this should be considered feasible.

The impregnation and chlorination step can be performed in any order. It is preferable, if in the chlorination step, the already impregnated carrier is reacted with chlorinating agent in order to establish an advantageous structure and balance between the elements on the carrier surface. The used agent is generally chlorine or a compound thereof with an element of groups III-V of the table of the elements. Typical chlorinating agents are chlorine, boron trichloride, ethylaluminium dichloride, diethyl aluminiumchloride, ethylaluminium sesquichloride, silicon tetrachloride and phosphorus trichloride. The most preferred agents are the alkyl aluminium chlorides, especially ethylaluminium dichloride.

In the present invention, essentially all of the aluminium used in the preparation of the procatalyst composition, at least in its impregnation and chlorination steps, is preferably in the form of an alkyl aluminium chloride. The chlorinating agent can be added as a mixture with a hydrocarbon liquid.

After the chlorination treatment, any solvent is removed together with any reaction by-products and the product is recovered as a catalytically active procatalyst with good morphology.

The invention also concerns a novel procatalyst, suitable for the polymerization of ethene and other α-olefins, which has been prepared by a process as described above. The invention also relates to a method for the polymerization of ethene and other α-olefins. The polymerization is carried out by means of a procatalyst, prepared by the above described process, and an organic cocatalyst compound of a metal belonging to the groups I(A)-III (Hubbard) of the periodic table of the elements and optionally in the presence of a molar mass regulating agent such as hydrogen and at least one electron donor.

The following examples merely illustrate the present invention.

### Experimental part

All experiments are performed under an inert atmosphere of dried and deoxygenized nitrogen or argon. All chemicals are dried and flushed with nitrogen or argon to remove oxygen prior to use.

### Polymerization procedure

I. A 3 L reactor was purged with an inert gasflow (nitrogen or argon) and it was charged with 1.8 L of isobutane. To this a 20 % solution of triethyl aluminium in pentane was added as cocatalyst from a feeding funnel followed by 20-50 mg of procatalyst as a slurry in 20 mL of n-pentane with mixing from a to 8 bars pressurized feeding funnel. The temperature was thereafter raised to 95°C and was kept there during the whole polymerization process.
   A 500 mL vessel was pressurized with hydrogen to a pressure of 6.2 bars. Hydrogen and ethylene gas were fed into the reactor. The total pressure was raised to 27 bars and was kept there by a continuous feed of ethylene gas. The polymerization was continued for 1 h.
   After 1 h the reactor was cooled and the pressure was slowly released in order to evaporate the isobutane.
II. The copolymerization of ethylene and α-olefins was performed according to step I above. The reactor was charged with 1.8 L of isobutane, cocatalyst (triethylaluminum) was then added before the addition of the catalyst. Comonomer was added as a mixture together with the ethylene feed.

### Preparation of the solution

### A. Solution made from solid magnesium alkoxide

0.214 g of magnesium-di-n-propoxide was charged in a 10 mL sealed bottle equipped with a magnetic stirrer, together with 0.171 mL neat titaniumtetrabutoxide and 0.320 mL neat 1-butanol. 2.0 mL of pentane was added and the formed slurry was heated for 1 h to form a solution of low viscosity.

### B. Solution made from in situ synthesized magnesium alkoxide made from magnesium alkyl and alcohol

2.0 mL pentane is charged in a 30 mL sealed bottle equipped with a magnetic stirrer, together with 0.171 mL neat titaniumtetrabutoxide and 0,320 mL neat 1-butanol. The mixture is kept well stirred at a temperature between 5-20°C while 1.714 mL of butyl octyl magnesium, 20 % in heptane (Schering A.G.) is added over 15 min. The solution obtained was a clear uncolored liquid of low viscosity.

### Preparation of catalysts

### Example 1

1.0 g of silica (Crosfield, grade EP 17, dried at 200°C) was charged into a 30 mL sealed bottle equipped with a magnetic stirrer. 1.83 mL of ethylaluminum dichloride, 20 % in pentane, was added together with 4.5 mL pentane at room temperature. The slurry was mixed at the same temperature for 3 h. The solution from (B) was then added at room temperature over a 10 min period and kept with continuous stirring for 1 h. A 0.91 mL aliquot of ethylaluminum dichloride, 20 % in pentane, was added to the slurry at room temperature and was stirred at 50°C for 1 h. The temperature was raised slowly to 85°C, with an argon gas flow through the flask, to evaporate the solvent leaving a dry material. Elemental analysis of the catalyst is described in table 3. The catalyst was polymerized, table 1 and 2 for the test data.

### Example 2

4.0 g of silica (Crosfield, grade EP 17, dried at 130°C) was charged into a 60 mL sealed bottle equipped with a magnetic stirrer. 4.5 mL of ethylaluminum dichloride, 20 % in pentane, was added together with 12 mL pentane at room temperature. The slurry was mixed at the same temperature for 1 h. 4 times the amount of the solution from (A) was then added at room temperature over a 10 min period and kept with continuous stirring for 2 h. A 9.14 mL aliquot of ethylaluminum dichloride, 20 % in pentane, was added to the slurry at room temperature and was stirred at 40°C for 2 h. The temperature was raised slowly to 85°C, with an argon gas flow through the flask, to evaporate the solvent leaving a dry material. Elemental analysis of the catalyst is described in table 3. The catalyst was polymerized, table 1 for the test data.

### Example 3

1.88 g of hexamethyl disilazane was added with stirring at room temperature to a slurry of 10.0 g silica (W.R. Grace & Co., Davison Grade 955, dehydrated and calcinated with a peak temperature at 600°C) in 80 mL of pentane. The slurry was kept stirring at a temperature of 90°C for 1 h, and the solvent was then removed by purging with a stream of nitrogen for 2.5 h and by raising the temperature during this time in stages to 110°C. The obtained product was a dry free-flowing white powder.

2.0 g of the hexamethyl disilazane treated silica was charged, together with 5.5 mL pentane, into a 50 mL sealed bottle equipped with a magnetic stirrer. 2 times the amount of the solution from (B) was then added at room temperature. 5.5 mL of ethylaluminum dichloride, 20 % in pentane, was added to the slurry at 2°C over a period of 25 min with subsequent stirring at 50°C for 1 h. The temperature was then raised slowly to 100°C, with an argon gas flow through the flask, to evaporate the solvent leaving a dry material. Elemental analysis of the catalyst is described in table 3. The catalyst was polymerized, table 1 for the test data.

### Example 4

3.0 g of silica (Crosfield, grade EP 17) was charged into a 50 mL sealed bottle equipped with a magnetic stirrer. 4.12 mL of ethylaluminum dichloride, 20 % in pentane, was added together with 12 mL pentane at room temperature. The slurry was mixed at the same temperature for 1 h. 3 times the amount of the solution from (A) was then added at room temperature over a 10 min period and kept with continuous stirring for 15 min. The solvent was then removed by evaporation at 40-85°C, thus forming a solid particulate material. 12 mL pentane was added after which 6.86 mL, of ethylaluminum dichloride, 20 % in pentane, was added to the slurry at room temperature and was stirred at 50°C for 2 h. The temperature was raised slowly to 85°C, with an argon gas flow through the flask, to evaporate the solvent leaving a dry material. Elemental analysis of the catalyst is described in table 3. The catalyst was polymerized, table 1 for the test data.

**Table 1**

| Test polymerization results according to method (I), homopolymerization | | | | |
|---|---|---|---|---|
| Example | 1 | 2 | 3 | 4 |
| Activity (Kg PO/g.cat.h.) | 6.7 | 4.31 | 6.41 | 3.27 |
| Bulk density (Kg/m³) | 328 | 259 | 347 | 313 |
| MFR 21 | 22.2 | 26.0 | 13.4 | 19.6 |
| MFR 5 | 2.50 | 2.66 | 1.5 | 2.04 |
| MFR 2 | 0.85 | 0.89 | 0.50 | 0.68 |
| FRR 21/2 | 26.1 | 29.3 | 26.6 | 28.7 |
| FRR 21/5 | 8.87 | 9.8 | 8.90 | 9.6 |

**Table 2**

| Comonomer test polymerization according to (II) | | |
|---|---|---|
| Example | 1 | 1 |
| Catalyst (mg) | 30 | 30 |
| Co catalyst 20 % TEA | 1.0 mL | 1.0 mL |
| Temperature, °C | 85 | 85 |
| Pressure, Ethylene, (bar) | 7.0 | 7.0 |
| Pressure, total, (bar) | 24 | 28 |
| Hydrogen/Ethylene (mol/mol) | 0.05 | 0.22 |
| Butene/Ethylene (mol/mol) | 0.25 | 1.0 |
| Ethylene % (mol) | 8.6 | 6.0 |
| Activity (Kg PO/g.cat.h.) | 5.9 | 4.0 |
| Bulk density (Kg/m³) | 201 | 245 |
| MFR 21 | 43.9 | |
| MFR 2 | 1.7 | 33.7 |
| FRR 21/2 | 26.6 | |
| Polydispersity (M_{w}/Mₙ) | 5.3 | 4.0 |
| Density, g/mL | 0.9477 | 0.9444 |

**Table 3**

| Elemental analysis of catalysts | | | | |
|---|---|---|---|---|
| Example | 1 | 2 | 3 | 4 |
| Ti % | 1.22 | 1.30 | 1.3 | 1.2 |
| Mg % | 1.8 | 1.80 | 1.9 | 1.7 |
| Al % | 4.60 | 5.00 | 4.4 | 6.0 |
| Cl % | 13.8 | 15.5 | 11.6 | 16.6 |

The test data show a polymer product of good morphology and rheology and a satisfyingly low content of titanium. The activity of the procatalyst prepared by the present invention is quite satisfying.

## Claims

1. Process for preparing a procatalyst composition suitable for the polymerization of ethane and other α-olefins, which comprises the steps of:
(a) contacting an inorganic oxide carrier, having its surface hydroxyl content lowered by calcination at 600-1000°C or by reaction with a hydroxyl removing agent, with an impregnation solution consisting of a magnesium compound, an alcohol, and a tetravalent titanium compound and optionally a hydrocarbon solvent,
(b) chlorinating the inorganic oxide carrier with a chlorinating agent, the steps (a) and (b) being performed in any order, and
(c) recovering the contacted and chlorinated product to yield the procatalyst,
characterized in that the magnesium compound is a magnesium alkoxide of the formula Mg(OR)₂ wherein the groups can be different or similar alkyl groups, the tetravalent titanium compound is a titanium alkoxide and the alcohol is an alcohol of the formula R²OH wherein R² is a C₁-C₈ alkyl group.

2. A process according to claim 1, characterized in that the inorganic oxide is silica.

3. A process according to claim 1 or 2, characterized in that the inorganic oxide carrier is dehydrated and calcinated silica, which for the removal at the surface hydroxyls has been reacted with a convenient silicium compound like hexamethyl disiliazane, or a convenient aluminum compound, like a trialkyl aluminum, or a chlorinated aluminium alkyl.

4. A process according to any preceding claim, characterized in that the hydrocarbon solvent is a C₄-C₁₀ hydrocarbon solvent.

5. A process according to any preceding claim, characterized in that in the magnesium alkoxide of formula Mg(OR)₂, R is a C₂-C₈ alkyl group, preferably C₂-C₅ alkyl group, or any mixture of such alkyl groups.

6. A process according to any preceding claim, characterized in that the titanium alkoxide is represented by the formula:
Ti(OR¹)₄
wherein R¹ is a C₂-C₈ alkyl group, preferably C₂-C₅ alkyl group, most preferably a C₃ or C₄ alkyl group, or any mixture of such alkyl groups.

7. A process according to any preceding claim, characterized in that the lower alcohol is represented by the formula:
R₂ OH
wherein R₂ is a C₂-C₅ alkyl group.

8. A process according to any of claims 4 to 7, characterized in that the impregnation solution is made by mixing together and heating the magnesium alkoxide, the titanium alkoxide, the alcohol and the hydrocarbon.

9. A process according to any preceding claim, characterized in that the molar ratio in the impregnation solution between the magnesium alkoxide and the titanium alkoxide exceeds 2.5 and is preferably between 2.5 and 4.

10. A process according to any preceding claim, characterized in that the molar ratio in the impregnation solution between the alcohol and the titanium alkoxide is larger than or equal to 1 and preferably between 1.5 and 3.

11. A process according to any preceding claim, characterized in that the molar ratio in the impregnation solution between the magnesium alkoxide and the alcohol is between 1 and 3, preferably between 1 and 2.

12. A process according to any of claims 1-7 and 9-11, characterized in that the impregnation solution is made *in situ* by mixing together a magnesium alkyl or magnesium alkoxy alkyl, dissolved in a hydrocarbon, with the titanium alkoxide and the alcohol, and allowing the magnesium alkyl or magnesium alkoxy alkyl to be essentially converted to said magnesium alkoxide.

13. A process according to claim 12, characterized in that the molar ratio between the alcohol and the titanium alkoxide is larger than or equal to 1 and preferably between 3 and 9.

14. A process according to claim 12 or 13, characterized in that the molar ratio between the magnesium alkyl or magnesium alkoxy alkyl and the alcohol is between 0.25 and 1, preferably between 0.4 and 0.8.

15. A process according to any of claims 12-14, characterized in that the alkyl of the magnesium alkyl or magnesium alkoxy alkyl is a C₂-C₈ alkyl.

16. A process according to any preceding claim, characterized in that the chlorinating agent is an alkyl aluminium chloride, preferably ethylaluminium dichloride.

17. A process according to claim 16, characterized in that essentially all of the aluminium used therein is in the form of alkyl aluminium chloride.

18. A procatalyst composition, suitable for the polymerization of ethene and other α-olefins, characterized in that it has been prepared by a process according to any of claims 1-17.

19. Method for the polymerization of ethene and other α-olefins, characterized in that the polymerization is carried out by means of a procatalyst composition according to claim 18 or a procatalyst composition prepared by the process according to any of claims 1-17 and an organic cocatalyst compound of a metal belonging to the groups IA-IIIA of the periodic table of the elements and optionally in the presence of a molar mass regulator and/or at least one electron donor.

## Patentansprüche

1. Verfahren zur Herstellung einer zur Polymerisierung von Ethen und anderen α-Olefinen geeigneten Prokatalysator-Zusammensetzung, folgende Schritte aufweisend:
(a) in Berührung Bringen eines Trägers aus anorganischem Oxid, dessen Oberflächen-Hydroxyl-Gehalt durch Calcinierung bei 600 bis 1000°C oder durch Reaktion mit einem Hydroxyl entfernenden Mittel verringert wurde, mit einer Imprägnierungslösung, die aus einer Magnesium-Verbindung, einem Alkohol und einer vierwertigen Titan-Verbindung und gewünschtenfalls einem Kohlenwasserstoff-Lösungsmittel besteht,
(b) Chlorieren des Trägers aus anorganischem Oxid mit einem Chlorierungsmittel, wobei die Schritte (a) und (b) in einer beliebigen Reihenfolge durchgeführt werden, und
(c) Gewinnen des in Berührung gebrachten und chlorierten Produkts, um den Prokatalysator zu ergeben,
**dadurch gekennzeichnet**, daß die Magnesium-Verbindung ein Magnesium-alkoxid der Formel Mg(OR)₂ ist, worin die Gruppen verschiedene oder gleiche Alkyl-Gruppen sein können, die vierwertige Titan-Verbindung ein Titanalkoxid ist und der Alkohol ein Alkohol der Formel R²OH ist, worin R² eine C₁-C₈-Alkyl-Gruppe ist.

2. Verfahren nach Anspruch 1, **dadurch gekennzeichnet**, daß das anorganische Oxid Siliciumoxid ist.

3. Verfahren nach Anspruch 1 oder 2, **dadurch gekennzeichnet,** daß der Träger aus anorganischem Oxid dehydratisiertes und calciniertes Siliciumoxid ist, das zur Entfernung der Oberflächenhydroxyle mit einer geeigneten Silicium-Verbindung wie Hexamethyl-disiliazan oder einer geeigneten Aluminium-Verbindung wie einem Trialkyl-aluminium oder einem chlorierten Alumininmalkyl zur Reaktion gebracht wurde.

4. Verfahren nach irgendeinem vorstehenden Anspruch, **dadurch gekennzeichnet**, daß das Kohlenwasserstoff-Lösungsmittel ein C₄-C₁₀-Kohlenwasserstoff-Lösungsmittel ist.

5. Verfahren nach irgendeinem vorstehenden Anspruch, **dadurch gekennzeichnet**, daß in dem Magnesium-alkoxid der Formel Mg(OR)₂, R eine C₂-C₈-Alkyl-Gruppe, bevorzugt eine C₂-C₅-Alkyl-Gruppe, oder irgendein Gemisch aus solchen Alkyl-Gruppen ist.

6. Verfahren nach irgendeinem vorstehenden Anspruch, **dadurch gekennzeichnet**, daß das Titan-alkoxid dargestellt wird durch die Formel:
Ti(OR¹)₄,
worin R¹ eine C₂-C₈-Alkyl-Gruppe, bevorzugt eine C₂-C₅-Alkyl-Gruppe, besonders bevorzugt eine C₃- oder C₄-Alkyl-Gruppe, oder irgendein Gemisch aus solchen Alkyl-Gruppen ist.

7. Verfahren nach irgendeinem vorstehenden Anspruch, **dadurch gekennzeichnet**, daß der niedere Alkohol dargestellt wird, durch die Formel:
R₂ OH,
worin R₂ eine C₂-C₅-Alkyl-Gruppe ist.

8. Verfahren nach einem der Ansprüche 4 bis 7, **dadurch gekennzeichnet**, daß die Imprägnierungs-Lösung hergestellt wird durch Zusammenmischen und Erwärmen des Magnesium-alkoxids, des Titanalkoxids, des Alkohols und des Kohlenwasserstoffs.

9. Verfahren nach irgendeinem vorstehenden Anspruch, **dadurch gekennzeichnet**, daß das Molverhältnis in der Imprägnierungs-Lösung zwischen dem Magnesium-alkoxid und dem Titan-alkoxid 2,5 übersteigt und bevorzugt zwischen 2,5 und 4 liegt.

10. Verfahren nach irgendeinem vorstehenden Anspruch, **dadurch gekennzeichnet**, daß das Molverhältnis in der Imprägnierungs-Lösung zwischen dem Alkohol und dem Titan-alkoxid größer oder gleich 1 ist und bevorzugt zwischen 1,5 und 3 liegt.

11. Verfahren nach irgendeinem vorstehenden Anspruch, **dadurch gekennzeichnet**, daß das Molverhältnis in der Imprägnierung-Lösung zwischen dem Magnesium-alkoxid und dem Alkohol zwischen 1 und 3, bevorzugt zwischen 1 und 2, liegt.

12. Verfahren nach einem der Ansprüche 1 bis 7 und 9 bis 11, **dadurch gekennzeichnet**, daß die Imprägnierungs-Lösung in situ hergestellt wird durch Zusammenmischen eines Magnesiumalkyls oder eines Magnesium-alkoxyalkyls, das in einem Kohlenwasserstoff gelöst ist, mit dem Titan-alkoxid und dem Alkohol, und Zulassen, daß das Magnesiumalkyl oder das Magnesium-alkoxyalkyl im wesentlichen in das Magnesium-alkoxid umgewandelt werden.

13. Verrfahren nach Anspruch 12, **dadurch gekennzeichnet**, daß das Molverhältnis zwischen dem Alkohol und dem Titan-alkoxid größer oder gleich 1 und bevorzugt zwischen 3 und 9 ist.

14. Verfahren nach Anspruch 12 oder 13, **dadurch gekennzeichnet**, daß das Molverhältnis zwischen dem Magnesiumalkyl oder Magnesium-alkoxyalkyl und dem Alkohol zwischen 0,25 und 1, bevorzugt zwischen 0,4 und 0,8, liegt.

15. Verfahren nach einem der Ansprüche 12 bis 14, **dadurch gekennzeichnet**, daß das Alkyl des Magnesiumalkyls oder Magnesiumalkoxyalkyls ein C₂-C₈-Alkyl ist.

16. Verfahren nach irgendeinem vorstehenden Anspruch, **dadurch gekennzeichent**, daß das Chlorierungsmittel ein Alkylaluminium-chlorid, bevorzugt Ethylaluminium-dichlorid, ist.

17. Verfahren nach Anspruch 16, **dadurch gekennzeichnet**, daß im wesentlichen das gesamte darin verwendete Aluminium in der Form von Alkylaluminium-chlorid ist.

18. Prokatalysator-Zusammensetzung, die zur Polymerisierung von Ethen und anderen α-Olefinen geeignet ist, **dadurch gekennzeichnet**, daß sie nach einem Verfahren gemäß einem der Ansprüche 1 bis 17 hergestellt wurde.

19. Verfahren zur Polymerisierung von Ethen und anderen α-Olefinen, **dadurch gekennzeichnet**, daß die Polymerisierung mittels einer Prokatalysator-Zusammensetzung gemäß Anspruch 18 oder einer nach dem Verfahren gemäß einem der Ansprüche 1 bis 17 hergestellten Prokatalysator-Zusammensetzung und einer organischen Cokatalysator-Verbindung eines zu den Gruppen IA-IIIA des Periodensystems der Elemente gehörenden Metalls, und gewünschtenfalls in Anwesenheit eines Molmassenregulators und/oder mindestens eines Elektronendonors durchgeführt wird.

## Revendications

1. Procédé de préparation d'une composition de procatalyse appropriée à la polymérisation d'éthène et autres α-oléfines, qui consiste en les étapes de :
(a) mettre en contact un support d'oxyde inorganique, ayant la teneur en groupes hydroxyle de sa surface diminuée par calcination à 600-1000°C ou par réaction avec un agent de suppression du groupe hydroxyle, avec une solution d'imprégnation constituée d'un composé de magnésium, d'un alcool, et d'un composé de titane tétravalent et éventuellement d'un solvant hydrocarboné,
(b) chlorer le support d'oxyde inorganique avec un agent chlorant, les étapes (a) et (b) étant effectuées dans un ordre quelconque, et
(c) recueillir le produit chloré et imprégné pour obtenir le procatalyseur,
caractérisé en ce que le composé de magnésium est un alkoxyde de magnésium de formule Mg(OR)₂ dans lequel les groupes peuvent être des groupes alkyle similaires ou différents, le composé de titane tétravalent est un alkoxyde de titane et l'alcool est un alcool de formule R²OH dans laquelle R² représente un groupe alkyle en C₁ à C₈.

2. Procédé selon la revendication 1, caractérisé en ce que l'oxyde inorganique est la silice.

3. Procédé selon la revendication 1 ou 2, caractérisé en ce que le support d'oxyde inorganique est de la silice calcinée et déshydratée, que pour l'élimination des groupes hydroxyle en surface on a fait réagir avec un composé de silicium approprié comme l'hexaméthyldisiliazane, ou un composé d'aluminium approprié, comme un trialkylaluminium, ou un alkylaluminium chloré.

4. Procédé selon l'une quelconque des revendications précédentes, caractérisé en ce que le solvant hydrocarboné est un solvant hydrocarboné en C₄ à C₁₀.

5. Procédé selon l'une quelconque des revendications précédentes, caractérisé en ce que dans l'alkoxyde de magnésium de formule Mg(OR)₂, R est un groupe alkyle en C₂ à C₈, de préférence un groupe alkyle en C₂ à C₅, ou un quelconque mélange de tels groupes alkyle.

6. Procédé selon l'une quelconque des revendications précédentes, caractérisé en ce que l'alkoxyde de titane est représenté par la formule :
Ti(OR¹)₄
dans laquelle R¹ est un groupe alkyle en C₂ à C₈, de préférence un groupe alkyle en C₂ à C₅, le plus préférentiellement un groupe alkyle en C₃ ou C₄, ou un quelconque mélange de tels groupes alkyle.

7. Procédé selon l'une quelconque des revendications précédentes, caractérisé en ce que l'alcool inférieur est représenté par la formule :
R₂OH
dans laquelle R₂ est un groupe alkyle en C₂ à C₅.

8. Procédé selon l'une quelconque des revendications 4 à 7, caractérisé en ce que la solution d'imprégnation est obtenue en mélangeant et en chauffant l'alkoxyde de magnésium, l'alkoxyde de titane, l'alcool et l'hydrocarbure.

9. Procédé selon l'une quelconque des revendications précédentes, caractérisé en ce que le rapport molaire dans la solution d'imprégnation entre l'alkoxyde de magnésium et l'alkoxyde de titane dépasse 2,5 et est de préférence compris entre 2,5 et 4.

10. Procédé selon l'une quelconque des revendications précédentes, caractérisé en ce que le rapport molaire dans la solution d'imprégnation entre l'alcool et l'alkoxyde de titane est supérieur ou égal à 1 et de préférence compris entre 1,5 et 3.

11. Procédé selon l'une quelconque des revendications précédentes, caractérisé en ce que le rapport molaire dans la solution d'imprégnation entre l'alkoxyde de magnésium et l'alcool est compris entre 1 et 3, de préférence entre 1 et 2.

12. Procédé selon l'une quelconque des revendications 1-7 et 9-11, caractérisé en ce que la solution d'imprégnation est obtenue *in situ* en mélangeant un alkylmagnésium ou un alkoxyalkylmagnésium, dissous dans un hydrocarbure, avec l'alkoxyde de titane et l'alcool, et en laissant l'alkylmagnésium ou l'alkoxyalkylmagnésium se transformer essentiellement en ledit alkoxyde de magnésium.

13. Procédé selon la revendication 12, caractérisé en ce que le rapport molaire entre l'alcool et l'alkoxyde de titane est supérieur ou égal à 1 et de préférence compris entre 3 et 9.

14. Procédé selon la revendication 12 ou 13, caractérisé en ce que le rapport molaire entre l'alkylmagnésium ou l'alkoxyalkylmagnésium et l'alcool est compris entre 0,25 et 1, de préférence entre 0,4 et 0,8.

15. Procédé selon l'une quelconque des revendications 12-14, caractérisé en ce que le groupe alkyle de l'alkylmagnésium ou de l'alkoxyalkylmagnésium est un groupe alkyle en C₂ à C₈.

16. Procédé selon l'une quelconque des revendications précédentes, caractérisé en ce que l'agent chlorant est un chlorure d'alkylaluminium, de préférence du dichlorure d'éthylaluminium.

17. Procédé selon la revendication 16, caractérisé en ce que sensiblement tout l'aluminium utilisé dans celui-ci est sous forme de chlorure d'alkylaluminium.

18. Composition de procatalyse, appropriée à la polymérisation d'éthène et autres α-oléfines, caractérisée en ce qu'elle a été préparée par un procédé selon l'une quelconque des revendications 1-17.

19. Procédé de polymérisation d'éthène et autres α-oléfines, caractérisé en ce que la polymérisation est effectuée au moyen d'une composition de procatalyse selon la revendication 18 ou d'une composition de procatalyse préparée par le procédé selon l'une quelconque des revendications 1-17 et d'un composé co-catalyseur organique d'un métal appartenant aux groupes IA-IIIA de la classification périodique des éléments et éventuellement en présence d'un régulateur de masse molaire et/ou d'au moins un donneur d'électrons.
